# EUROPÄISCHE PATENTSCHRIFT

(11) **EP 2 783 737 B1**
(45) Veröffentlichungstag und Bekanntmachung des Hinweises auf die Patenterteilung: **03.01.2018**
(21) Anmeldenummer: 13161536.1
(22) Anmeldetag: 28.03.2013
(51) Int. Cl.: B01D 33/04, B01D 33/46, B01D 33/80

(54) **Filtervorrichtung und Verfahren zum Abscheiden von Material aus einer Flüssigkeit**
Filter device and method for separating material from a liquid
Dispositif de filtre et procédé destinés à séparer la matière d'un liquide

(43) Veröffentlichungstag der Anmeldung: 01.10.2014
(73) Patentinhaber: RHYTON GmbH, 4900 Langenthal (CH)
(72) Erfinder: Ammann, Hans Ulrich, 4900 Langenthal (CH)
(74) Vertreter: AMMANN PATENTANWÄLTE AG BERN

(56) Entgegenhaltungen:
- EP-A2- 1 671 694
- DE-A1- 3 808 968
- JP-A- S59 166 223

## Beschreibung

Die Erfindung bezieht sich auf eine Filtervorrichtung gemäss Oberbegriff des Patentanspruchs 1 sowie ein Verfahren zum Abscheiden von Material aus einer Flüssigkeit.
Derartige Filtervorrichtungen und Verfahren werden zur Reinigung von Flüssigkeiten eingesetzt, die beispielsweise bei Bearbeitungsmaschinen verwendet werden und die Späne, Schleifpartikel, Staub und dergleichen enthalten können. Zum Herausfiltern dieses Materials werden u. a. Filter in Form eines Bandes verwendet, das durch die Filtervorrichtung hindurch transportiert wird. Ein Beispiel für eine derartige Filtervorrichtung ist in der DE 3808968 offenbart. Die bekannten Filtervorrichtungen und Verfahren haben den Nachteil, dass der Filter relativ rasch verstopft und daher oft vorgeschoben werden muss, um einen frischen Abschnitt zur Filtration bereitstellen zu können. Dies ist besonders bei Filtern nachteilig, die für den Einweggebrauch ausgelegt sind, da der häufige Wechsel entsprechende Kosten verursacht.
Es ist eine Aufgabe der Erfindung, eine Filtervorrichtung und ein Verfahren anzugeben, bei welcher bzw. welchem der Filter im Betrieb weniger schnell verstopft.
Diese Aufgabe wird durch die Vorrichtung gemäss dem Anspruch 1 sowie durch das Verfahren gemäss dem unabhängigen Verfahrensanspruch gelöst. Die weiteren Ansprüche geben bevorzugte Ausführungen der erfindungsgemässen Vorrichtung und des erfindungsgemässen Verfahrens an.
Gemäss Anspruch 1 weist die Filtervorrichtung Fördermittel auf, welche mindestens einen Förderantrieb aufweisen, um abgeschiedenes Material relativ zum Filter zu bewegen. Dies erlaubt es, unabhängig von einem Vorschub des Filters das Material wegzufördern und so einer vorzeitigen Verstopfung des Filters entgegenzuwirken.

Die Erfindung wird im Folgenden anhand von Ausführungsbeispielen unter Bezugnahme auf Figuren erläutert.

Es zeigen
Fig. 1 ein erstes Ausführungsbeispiel einer Filtervorrichtung in einer Seitenansicht;
Figg. 2-5 verschiedene Stellungen der Filtervorrichtung gemäss Fig. 1 beim Transport von abgeschiedenem Material;
Fig. 6 ein zweites Ausführungsbeispiel einer Filtervorrichtung in einer Seitenansicht;
Figg. 7-14 verschiedene Stellungen der Filtervorrichtung gemäss Fig. 6 beim Transport von abgeschiedenem Material; und
Figg. 7a-14a die dazu entsprechenden Stellungen der Welle des einen Förderantriebs.

### 1. Ausführungsbeispiel

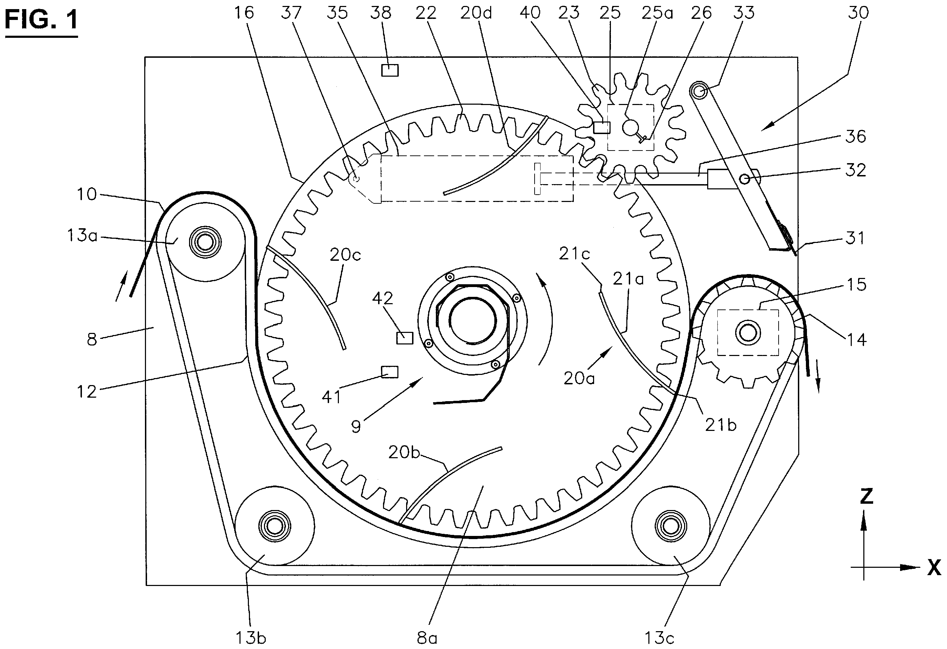

Fig. 1 zeigt ein erstes Ausführungsbeispiel einer Filtervorrichtung in einer Seitenansicht, bei welcher die vordere Seitenwand weggelassen ist. Die Filtervorrichtung ist als sogenannter Trommelfilter ausgelegt. Sie umfasst eine Wanne 8, welche durch einen Boden sowie Seitenwänden begrenzt ist und welche einen Einlass 9 aufweist zum Einleiten von Flüssigkeit mit herauszufilterndem Material. Weiter weist die Wanne 8 einen Auslass auf, durch welchen hindurch die gefilterte Flüssigkeit nach aussen ableitbar ist.

In der Wanne 8 ist ein Filter 10 aufnehmbar zur Bildung einer Filtermulde 8a, in welche die zu filtrierende Flüssigkeit leitbar ist. Im Beispiel gemäss Fig. 1 ist der Filter 10 Teil eines Filterbandes, welches in X-Richtung durch die Wanne 8 hindurch bewegt wird. Die Art des Filterbandes ist für den Anwendungszweck ausgelegt. Es ist z. B. für den Einweggebrauch gedacht und besteht aus einem Vlies oder einem anderen geeigneten Filtermedium. Die Filtermulde 8a ist in Transportrichtung des Filters 10 gesehen rund, vorzugsweise kreisrund ausgebildet.

Zum Verschieben des Filters 10 umfasst die Filtervorrichtung eine Auflage 12, welche in Form eines Endlosbandes mit Flüssigkeitsdurchtrittsöffnungen ausgebildet ist. Die Auflage 12 verläuft um Führungsrollen 13a, 13b, 13c sowie eine Antriebsrolle 14, die an einen Filterantrieb 15 gekoppelt ist. Die Antriebsrolle 14 weist hier Zähne auf, die in Öffnungen in der Auflage 12 greifen, um diese zu bewegen und so den Filter 10 mit dem gewünschten Vorschub zu transportieren.

Zur Führung und seitlichen Abdichtung des Filters 10 dienen zwei drehbare Dichtteile in Form von Dichtscheiben 16, welche quer zur Transportrichtung des Filters 10, d. h. hier in Y-Richtung versetzt zueinander angeordnet sind. Der Filter 10 ist an seinen beiden Längsrändern zwischen Auflage 12 und Dichtscheiben 16 gehalten, so dass die zu filternde Flüssigkeit seitlich nicht abfliessen kann. Filter 10 und Dichtscheiben 16 definieren somit eine Filtermulde 8a, in welcher sich das aus der Flüssigkeit abgeschiedene Material ansammelt. Je nach Anwendungszweck können dies Späne, Schleifpartikel, Staub oder andere Teilchen sein, deren Ansammlung sich zu einem entsprechenden Sediment bzw. Filterkuchen ausbilden.

Ausgangsseitig der Filtervorrichtung ist eine Sammelstation, z. B. ein Sammelbehälter, angeordnet, an welcher das abgeschiedene Material gesammelt wird und/oder der verbrauchte Teil des Filters 10 abgelegt wird.

Um abgeschiedenes Material von der Filtermulde 8a entlang eines Förderweges zur Sammelstation zu fördern, weist die Filtervorrichtung Fördermittel mit Förderelementen 20a-20d, 30 auf. Diese sind unabhängig von der Bewegung des Filters 10 bewegbar, so dass durch das wiederkehrende Herausfördern von Material einer vorzeitigen Verstopfung des Filters 10 in der Filtermulde 8a entgegengewirkt werden kann.

Beim Ausführungsbeispiel gemäss Fig. 1 weisen die Fördermittel Schaufeln ("Paddel") 20a, 20b, 20c, 20c auf, die um eine Drehachse rotierbar gelagert sind. Diese ist koaxial zur Drehachse der Dichtscheiben 16 angeordnet. Die Schaufeln 20a-20d sind an einem Drehteil 22 befestigt, welches hier als Zahnrad ausgebildet ist. Die jeweilige Schaufel 20a-20d weist eine Aufnahmefläche 21a auf, die sich einerseits zwischen den Dichtscheiben 16 in Y-Richtung erstreckt und andererseits - wie aus der Fig. 1 ersichtlich - von einem äusseren Ende 21b zu einem inneren Ende 21c verläuft. Das äussere Ende 21b der jeweiligen Schaufel 20a-20d ist so angeordnet, dass es bei der Drehung nahe am Filter 10 vorbei bewegbar ist, um so abgeschiedenes Material auf die Aufnahmefläche 21a aufnehmen zu können. Je nach Auslegung der Schaufeln 20a-20d kann diese dabei den Filter 10 kontaktieren.

Beim Beispiel gemäss Fig. 1 sind die Schaufeln 20a-20d gekrümmt ausgebildet, wobei die Krümmung vorzugsweise so gewählt ist, dass die Aufnahmefläche 21a im Querschnitt gemäss Fig. 1 gesehen einen im Wesentlichen kreisrunden Verlauf aufweist.

Beim Beispiel gemäss Fig. 1 sind vier Schaufeln 20a-20d vorgesehen, die um den gleichen Winkel versetzt um die Drehachse angeordnet sind. Je nach Auslegung kann die Anzahl der Schaufeln auch anders sein und eins, zwei oder mehr betragen, wobei der Winkel zwischen den jeweiligen Schaufeln auch verschieden sein kann.

Das hier als Zahnrad ausgebildete Drehteil 22 greift in ein Antriebszahnrad 23, welches über einen ersten Förderantrieb 25 in Drehung versetzbar ist. Das Antriebszahnrad 23 ist hier direkt an die Antriebswelle 25a des Förderantriebs 25 gekoppelt. Das Übersetzungsverhältnis zwischen dem Zahnrad 23 und dem Zahnrad 22 ist an die Anzahl der Schaufeln 20a-20d angepasst und beträgt hier 4:1.

Als weitere Fördermittel weist die Filtervorrichtung hier einen Abstreifer ("Schaber") 30 auf, der ausserhalb der Filtermulde 8a angeordnet ist. Der Abstreifer 30 ist mittels eines zweiten Förderantriebs 35 um eine Verschwenkachse 33 verschwenkbar, die hier in Y-Richtung verläuft und somit parallel zur Drehachse des Drehteils 22 angeordnet ist. Der Abstreifer 30 weist endseitig ein Abstreifteil in Form einer Lippe 31 auf, die sich in Y-Richtung erstreckt und vorzugsweise aus einem elastischen Material, beispielsweise Gummi, gefertigt ist. Der Abstreifer 30 dient dazu, entlang der jeweiligen Schaufel 20a-20d bewegt zu werden, so dass die Lippe 31 entlang der Aufnahmefläche 21a einer Schaufel 20a-20d fährt und so darauf liegendes Material abgestreift wird.

Der zweite Förderantrieb 35 ist hier als Linearantrieb mit einer Linearachse 36 ausgebildet, die linear verschiebbar und an einer Kopplungsstelle 32 am Abstreifer 30 angelenkt ist. Um das an der Kopplungsstelle 32 angelenkte Ende der Linearachse 36 auf einer Kreisbahn bewegen zu können, ist der Linearantrieb 35 verschwenkbar um eine Drehstelle 37 gelagert. Als Linearantrieb 35 ist z. B. ein pneumatischer Zylinder geeignet, dessen Bewegung über ein Ventil 38 steuerbar ist. Der Zylinder ist hier beidseitig mit Druckluft beaufschlagbar und somit doppelwirkend.

Als Förderantrieb 35 ist auch ein Antrieb anderer Art denkbar, z. B. ein elektrischer. Es ist auch möglich, einen Drehantrieb einzusetzen, um den Abstreifer 30 zu verschwenken.

Zur Steuerung der Filtervorrichtung sind Sensormittel 40, 41, 42 vorgesehen, welche vorzugsweise wie folgt ausgelegt sind:
- Ein erster Sensor 40 dient zum Erfassen der Lage der Schaufeln 20a-20d. Der Sensor 40 ist hier als Positionsschalter ausgebildet, welcher bei jeder Drehung des Antriebszahnrades 23 schaltet. Zu diesem Zweck ist z. B. auf der Antriebswelle 25a des Förderantriebs 25 ein Positionsnocken 26 angeordnet, der durch den Sensor 40 erfassbar ist.
- Ein zweiter Sensor 41 dient zum Erfassen eines Betriebsniveaus der Flüssigkeit in der Filtermulde 8a. Erreicht der aktuelle Flüssigkeitsstand dieses Niveaus, so ist der in der Mulde 8a liegende Teil des Filters 10 zu stark verschmutzt, so dass Flüssigkeit in zu geringer Menge durchsickert. Über den Filterantrieb 15 wird der Vorschub des Filters 10 eingeleitet, so dass ein unverschmutzter Teil des Filters 10 in die Mulde 8a gelangt.
- Ein dritter Sensor 42 dient zum Erfassen eines Höchstniveaus der Flüssigkeit in der Filtermulde 8a, welches den Höchststand definiert. Wird dieses Niveau erreicht, so ist der Betrieb gestört und es droht, dass Flüssigkeit über den Rand der Wanne 8 hinausfliesst.

Die zeitliche Steuerung der Fördermittel 20a-20d, 22, 23, 25, 30, 35 erfolgt beispielsweise über eine Zeitschaltung, welche programmierbar ist. Diese ist z. B. so ausgelegt, dass wiederkehrend das Antriebszahnrad 23 um eine volle Umdrehung gedreht wird und dann der Zyklus des Abstreifens eingeleitet wird. Dabei sind, solange der Abstreifer 30 in Bewegung ist, die Antriebswelle 25a und somit das Antriebszahnrad 23 sowie die Einheit aus Drehteil 22 und Schaufeln 20a-20d verriegelt. Die Häufigkeit des Abstreifens ist über die Zeitschaltung an die jeweilige Art der zu filtrierenden Flüssigkeit und an die Menge des darin enthaltenen Materials anpassbar.

Die Steuerung ist weiter so ausgelegt, dass beim Vorschub des Filters 10, bei welchem ein unverschmutzter Abschnitt des Filters 10 in die Filtermulde 8a gebracht wird, beide Antriebe 15 und 25 aktiviert werden und so die Einheit aus Drehteil 22 und Schaufeln 20a-20d zusammen mit dem Filter 10 bewegt wird. Dabei drehen sich ebenfalls die beiden Dichtscheiben 16. Vorteilhafterweise ist die Bewegung des Drehteils 22 etwas schneller als der Vorschub des Filters 10 gewählt. Dadurch wird verhindert, dass der Filter 10 gegen die Kanten der Schaufeln 20a-20d gedreht wird und es zu einer unerwünschten Abnützung kommt. Beim Ausführungsbeispiel gemäss Fig. 1 ist das Verhältnis der Bewegung des Antriebszahnrades 23 zum Filtervorschub 1:≈4.1.

Um bei einer etwaigen Fehlfunktion eine Kollision des Abstreifers 30 mit den Schaufeln 20a-20d zu vermeiden, ist die Steuerung so ausgelegt, dass sich im stromlosen Zustand der Abstreifer 30 in der in Fig. 1 gezeigten Grundstellung befindet, d. h. ausserhalb des Bereichs des Drehteils 22.

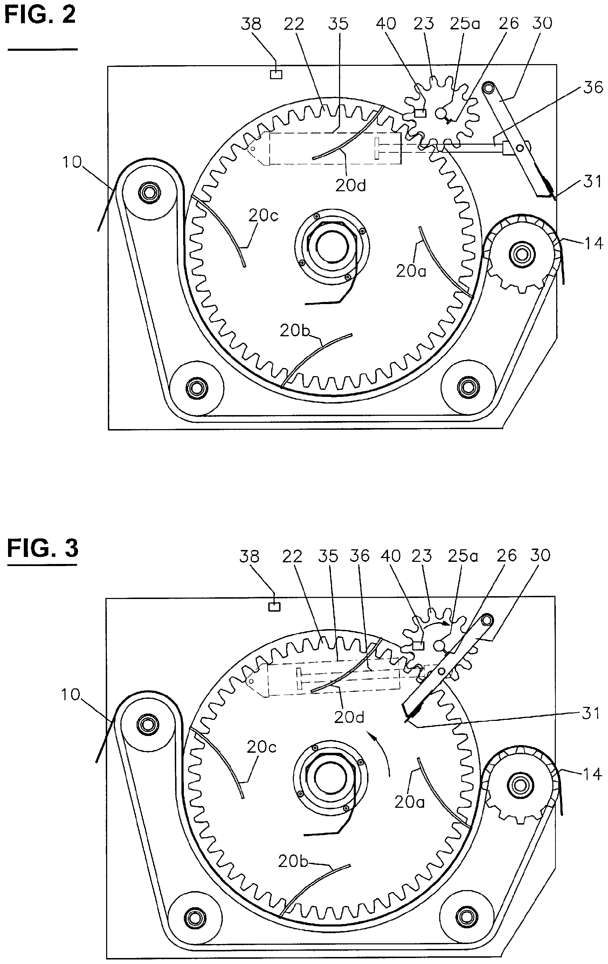

Figuren 2-4 zeigen die verschiedenen Phasen 1-4 eines Zyklus des Abstreifens, welcher nachfolgend für die Schaufel 20a erläutert ist. Der Zyklus ist für die anderen Schaufeln 20c-20d analog.

Fig. 2 bezieht sich auf die Phase 1: Anfangsposition. Der Zyklus beginnt mit der Situation, bei welcher die Antriebswelle 25a stillsteht, das Ventil 38 ausgeschaltet und der Zylinder 36 des Antriebs 35 ausgefahren ist, so dass sich der Abstreifer 30 in der Grundstellung befindet. Weiter ist die Schaufel 20a in einer Anfangsposition. Sobald über die Zeitschaltung, welche die Wiederholungsrate des Zyklus steuert, ein Signal kommt, wird das Ventil 38 eingeschaltet. Dadurch wird der Zylinder 36 angesteuert.

Fig. 3 bezieht sich auf die Phase 2: "Lauerposition". Durch das Einschalten des Ventils 38 wird der Zylinder 36 eingefahren, wodurch der Abstreifer 30 verschwenkt und in die "Lauerposition" gebracht wird.

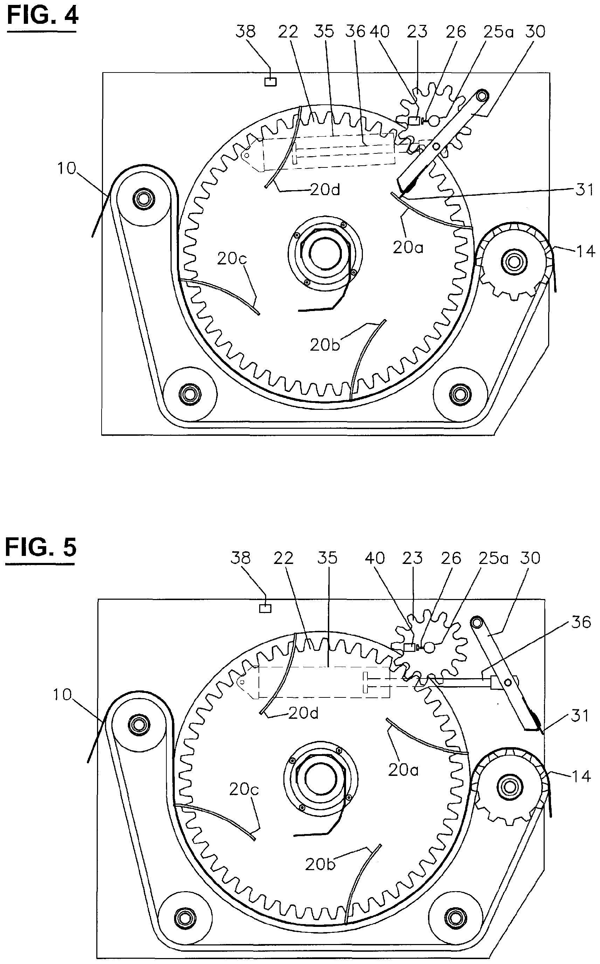

Fig. 4 bezieht sich auf die Phase 3: Auslöseposition. Die Antriebswelle 25a hat sich gedreht, bis sich der Positionsnocken 26 über dem Positionsschalter 40 befindet und dieser einschaltet, so dass sein Zustand von "Aus" auf "Ein" wechselt. Die Rotation der Antriebswelle 25a wird gestoppt und verriegelt. Nun befindet sich die Schaufel 20a in der in Fig. 4 gezeigten Abstreifposition. Das Ventil 38 schaltet aus. Dadurch wird der Zylinder 36 in die Anstossrichtung angesteuert.

Die Lippe 31 des Abstreifers 30 folgt beim Ausfahren des Zylinders 36 der Kontur der Schaufel 20a und nimmt darauf befindliches Material mit. Dieses wird dabei zumindest teilweise direkt zur Sammelstation ausgetragen oder fällt auf den Filter 10 und gelangt beim nächsten Filtervorschub zur Sammelstation.

Die Verriegelung des Drehteils 22 und der Antriebsrolle 14 wird erst wieder gelöst, wenn sich der Abstreifer 30 in der Grundstellung befindet.

Fig. 5 bezieht sich auf die Phase 4: Endposition. Der Positionsnocken 26 befindet sich nach wie vor über dem Positionsschalter 40, das Ventil 38 ist ausgeschaltet und die Schaufel 20a ist in der Abstreifposition.

Der Abstreifer 30 ist nun wieder in der Grundstellung. Wenn der Zylinder 36 ausgefahren ist, wird über einen (nicht dargestellten) Schalter die Verriegelung der Antriebswelle 25a und der Antriebsrolle 14 aufgehoben.

Die Antriebswelle 25a dreht für eine gewisse Zeit, die wie oben erwähnt, einstellbar ist. Nach Ablaufen dieser Zeit befindet sich nun die nächste Schaufel 20b in der Anfangsposition und der nächste Zyklus analog der oben beschriebenen Phasen 1-4 beginnt, sobald die Zeitschaltung erneut ein Signal abgibt.

### 2. Ausführungsbeispiel

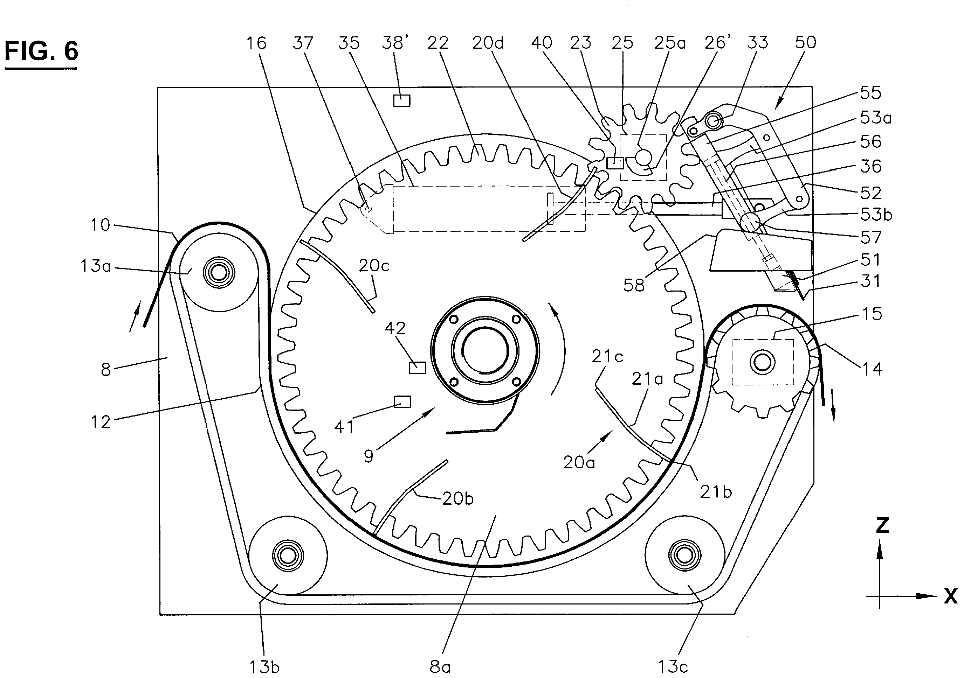

Fig. 6 zeigt ein zweites Ausführungsbeispiel einer Filtervorrichtung. Gleiche Teile wie beim ersten Beispiel gemäss Fig. 1 sind mit den gleichen Bezugszeichen versehen.

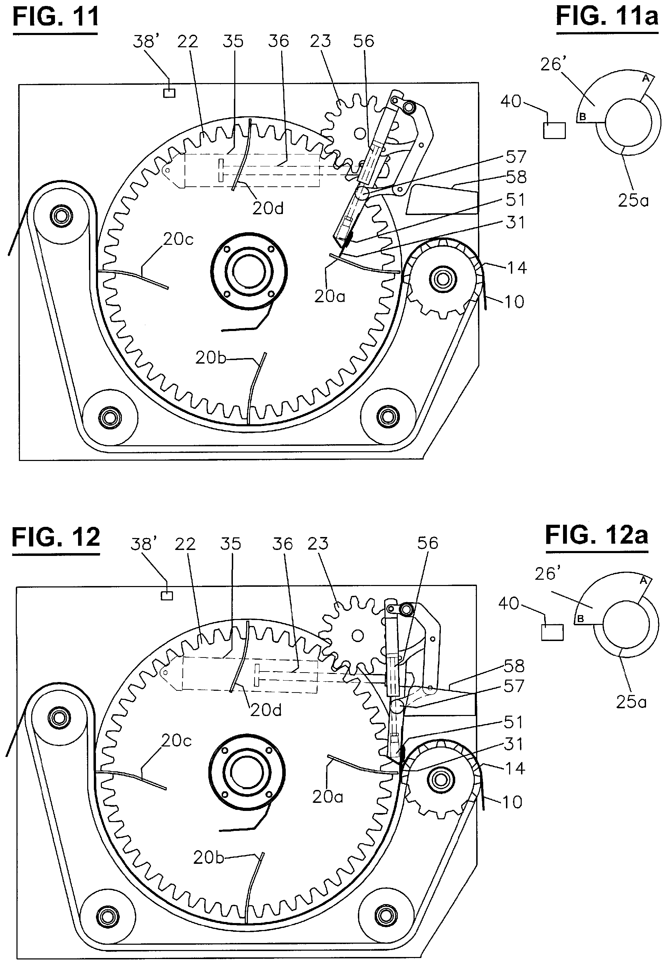

Das zweite Ausführungsbeispiel unterscheidet sich vom ersten Beispiel im Wesentlichen darin, dass eine Abstreifeinrichtung 50 mit einem Abstreifer 51 vorgesehen ist, der nebst der Schwenkbewegung um die Verschwenkachse 33 in einer weiteren Achse bewegbar ist. Dadurch ist es möglich, den Abstreifer 51 entlang einer Kontur zu bewegen, die Abschnitte mit verschiedenen Krümmungen aufweisen kann. Insbesondere kann zum Abstreifen der Abstreifer 51 entlang einer Schaufel 20a-20d als auch entlang eines Abschnitts des Filters 10 bewegt werden. Dadurch kann der Prozess des Abstreifens früher eingeleitet werden, insbesondere dann, wenn der Spalt zwischen dem äusseren Ende einer Schaufel 20a-20d noch klein ist (vgl. den Abstand zwischen dem äusseren Ende 21b der Schaufel 20a in den Figuren 4 und 11). Insgesamt erlaubt es das zweite Ausführungsbeispiel, abgeschiedenes Material besonders effizient zur Sammelstation zu transportieren.

Für die zusätzliche Bewegung ist ein dritter Förderantrieb 55 vorgesehen. Dieser ist hier als Linearantrieb mit einer Linearachse 56 ausgebildet, die linear verschiebbar und endseitig an den mit der Lippe 31 versehenen Abstreifer 51 gekoppelt ist. Der Linearantrieb 55 ist um die Verschwenkachse 33 verschwenkbar.

Als Linearantrieb 55 ist z. B. ein pneumatischer Zylinder geeignet. Dieser ist hier beidseitig mit Druckluft beaufschlagbar und somit doppelwirkend. Als Förderantrieb 55 ist auch ein Antrieb anderer Art denkbar, z. B. ein elektrischer.

Der Förderantrieb 55 ist hier über eine ParallelogrammKinematik 52, 53a, 53b an den Abstreifer 51 gekoppelt. Diese weist einen Bügel 52 auf, der um die Verschwenkachse 33 verschwenkbar ist, sowie zwei Stangen 53a, 53b, die parallel angeordnet und jeweils endseitig mit dem Bügel 52 sowie dem Abstreifer 51 gelenkig verbunden sind.

An der gemäss Fig. 6 unteren Stange 53b ist bei der Kopplungsstelle an den Abstreifer 51 ein Führungsbolzen 57 angeordnet, welcher auf eine Führungsschiene 58 wirken kann und so den Abstreifer 51 - wie unten erläutert - in der Bewegung zurück in die Ausgangsposition führt.

Die Linearachse 36 des zweiten Förderantriebs 35 ist endseitig so an die Abstreifeinrichtung 50 gekoppelt, dass durch Betätigen des Antriebs 35 die Einheit aus Abstreifer 51, Bügel 52, Stangen 53a, 53b, Förderantrieb 55 und Führungsbolzen 57 um die Verschwenkachse 33 verschwenkt wird.

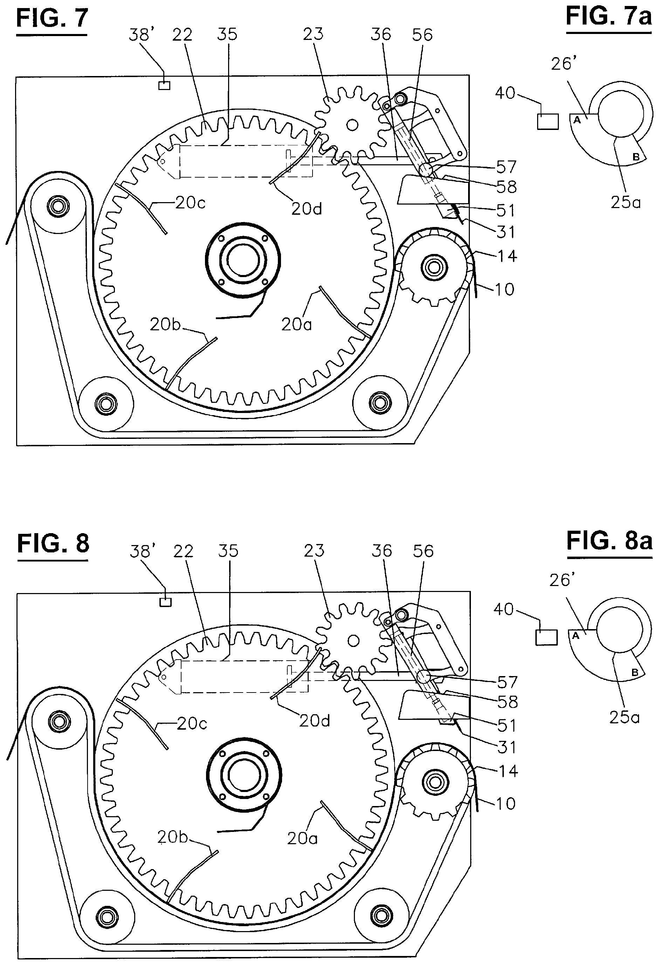

Zur Steuerung des Bewegungsablaufes, insbesondere zur Aktivierung der Förderantriebe 35, 55 dient ein geeigneter Sensor 40. Dieser ist hier in Form eines Positionsschalters ausgestaltet, auf welchen einer auf der Antriebswelle 25a angebrachter Positionsnocken 26' wirken kann. Der Positionsnocken 26' erstreckt sich über einen Winkelbereich, dessen Anfangs- und Endbereich jeweils eine Position definieren (vgl. Positionen A und B in Fig. 7a).

Das Antriebszahnrad 23 wird wie beim ersten Beispiel über eine Zeitschaltung gesteuert. Solange der Abstreifer 51 in Bewegung ist, wird die Antriebswelle 25a und somit das Antriebszahnrad 23 verriegelt. Ebenfalls ist eine Drehung des Drehteils 22 mit den Schaufeln 20a-20d verriegelt. Diese Verriegelung wird über die Antriebswelle 25a gesteuert.

Sind die Antriebe 35, 55 pneumatischer Art, so ist die Bewegung der Zylinder 36, 56 über Ventilmittel 38' steuerbar, die über den Sensor 40 geschaltet werden. Hier ist das pneumatische System so ausgelegt, dass ein einzelnes schaltbares Ventil vorgesehen ist, um beide Zylinder zu bewegen. Der erste Zylinder 36 weist zusätzlich Drosselrückschlagventile auf, um ihn zeitlich verzögert in Bezug auf die Bewegung des zweiten Zylinders 56 zu verschieben. Im stromlosen Zustand befindet sich der Abstreifer 51 in der in Fig. 6 gezeigten Grundstellung, d. h. ausserhalb des Bereichs des Drehteils 22.

Nachfolgend werden anhand der Figuren 7-14 die verschiedenen Phasen eines Zyklus erläutert, in welchem von der Schaufel 20a Material abgestreift wird. Der Zyklus ist für die anderen Schaufeln 20c-20d analog. Die Figuren 7a-14a zeigen jeweils im Detail die jeweilige Stellung der Antriebswelle 25a mit dem Positionsnockens 26' in Bezug auf den Positionsschalter 40.

Der Zyklus wird, wenn einmal gestartet, immer ganz durchgeführt. Er ist der Ablauf mit der höchsten Priorität. Ist, wie unten erläutert, die Startbedingung für die Phase 1 erfüllt, so werden alle anderen Abläufe vorerst gestoppt und allenfalls nach dem Zyklus vollendet.

Die Steuerung der Filtervorrichtung ist so ausgelegt, dass analog dem ersten Beispiel beim Vorschub des Filters 10 das Drehteil 32 mit den Schaufeln 20a-20d mitbewegt wird. Der Vorschub des Filters 10 wird jedoch unterbrochen, wenn der Positionsschalter 40 auf "Ein" schaltet und den Zyklus einleitet, und erst nach Durchführung des Zyklus vollendet. Solange der Zyklus aktiv ist, wird der Vorschub des Filters 10 verriegelt, so dass z. B. auch bei Auslösen des Sensors 41 oder 42 der Filter 10 nicht bewegt wird.

Figuren 7 und 7a beziehen sich auf die Phase 1, die Anfangsposition, in welcher das Ventil 38' ausgeschaltet ist und sich der Abstreifer 51 in der Grundstellung befindet. Dabei ist der Zylinder 36 ausgefahren und der Zylinder 56 wird durch die Führungsschiene 58 zurückgehalten.

Der Zyklus beginnt nun mit der Situation, in welcher sich die Antriebswelle 25a gedreht hat, bis sich der Positionsschalter 40 - wie in Fig. 7a gezeigt - über dem Positionsnocken 26' bei der Position A befindet und schaltet. Der Zustand des Positionsschalters 40 wechselt von "Ein" auf "Aus". Die Rotation der Antriebswelle 25a wird gestoppt und verriegelt. Nun befindet sich die Schaufel 20a in einer ersten Position, wie in Fig. 7 gezeigt. Das Ventil 38' schaltet ein. Dadurch werden die beiden Zylinder 36, 56 über das Ventil 38' parallel angesteuert. Die Verriegelung der Einheit 20a-20d, 22 wird erst wieder gelöst, wenn sich der Abstreifer 51 regungslos in der "Lauerstellung" befindet (vgl. Phase 3 unten). Die Antriebsrolle 14 bleibt verriegelt, bis sich der Abstreifer 51 wieder in der Grundstellung befindet (vgl. Phase 8 unten).

Figuren 8 und 8a beziehen sich auf die Phase 2: Anziehposition. Der zweite Zylinder 56 reagiert ohne Verzögerung und wird angezogen. Der erste Zylinder 36 wird auch ausgelöst, aber weil er hier mit einem Drosselrückschlagventil versehen ist, wird seine Kolbenbewegung verzögert. Durch das Einziehen des Zylinders 56 wird die Distanz zwischen Abstreifer 51 und Filter 10 vergrössert. Dadurch wird die Gefahr verringert, dass der Abstreifer 51 beim Verschwenken Material, welches sich noch auf dem Filter 10 bei der Antriebsrolle 14 befindet, zurück in die Filtermulde 8a stösst.

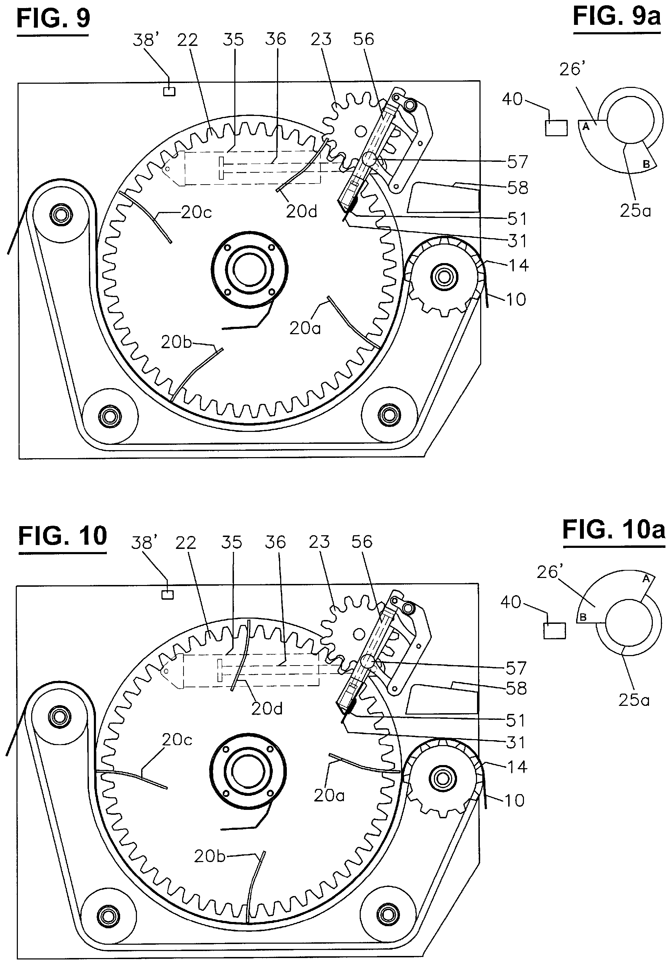

Figuren 9 und 9a beziehen sich auf die Phase 3: "Lauerposition A". In der Zwischenzeit hat auch der gedrosselte Zylinder 36 seine volle Bewegung gemacht und ist so wie der Zylinder 56 angezogen. Der Abstreifer 51 befindet sich in der "Lauerstellung". Jetzt, da die Bewegung der Zylinder 36, 56 vollendet wurde, ist die Verriegelung der Antriebswelle 25a aufgehoben, so dass sich diese weiterdrehen kann.

Figuren 10 und 10a beziehen sich auf die Phase 4: "Lauerposition B". Die Antriebswelle 25a hat sich gedreht, bis der Positionsschalter 40 den Positionsnocken 26' bei B überfährt und ausschaltet. Der Zustand des Positionsschalters 40 wechselt von "Ein" auf "Aus". Die Rotation der Antriebswelle 25a wird gestoppt und verriegelt. Nun befindet sich die Schaufel 20a in einer zweiten Position, wie in Fig. 10 gezeigt. Das Ventil 38' schaltet aus. Dadurch werden die beiden Zylinder 36, 56 über das Ventil 38' parallel in die Ausstossrichtung angesteuert. Die Verriegelung der Einheit 20a-20d, 22 und der Antriebsrolle 14 wird erst wieder gelöst, wenn sich der Abstreifer 51 regungslos in der Grundstellung befindet (vgl. Phase 8).

Figuren 11 und 11a beziehen sich auf die Phase 5: Auslöseposition. Der Zylinder 56 reagiert ohne Verzögerung und fährt aus. Der Zylinder 36 wird auch ausgelöst, aber weil er mit einem zweiten Drosselrückschlagventil versehen ist, wird seine Kolbenbewegung verzögert. Der Zylinder 56 wirkt als Luftfeder und drückt die Lippe 31 an die Schaufel 20a. Der Zylinder 36 fährt langsam aus. Durch diese zwei Bewegungen, aus dem Druck des Zylinders 56 und dem Vorschub des Zylinders 36, folgt die Lippe 31 genau der Kontur der Schaufel 20a und kann das darauf befindliche Material mitnehmen. Eine Drehung der Einheit 20a-20d, 22 und der Antriebsrolle 14 wird weiterhin verriegelt.

Figuren 12 und 12a beziehen sich auf die Phase 6: Anstiegposition. Der Zylinder 36 ist mittlerweile bis etwa zur Hälfte ausgefahren. Damit die Lippe 31 der Kontur des Filters 10 nachfahren kann, wird der Abstreifer 51 über die Führungsschiene 58 geleitet. Dabei ermöglicht die spezielle parallelogrammförmige Kinematik der Abstreifeinrichtung 50 die Bewegung des Abstreifers 51 in der Vertikalen. Eine Drehung der Einheit 20a-20d, 22 und der Antriebsrolle 14 wird weiterhin verriegelt.

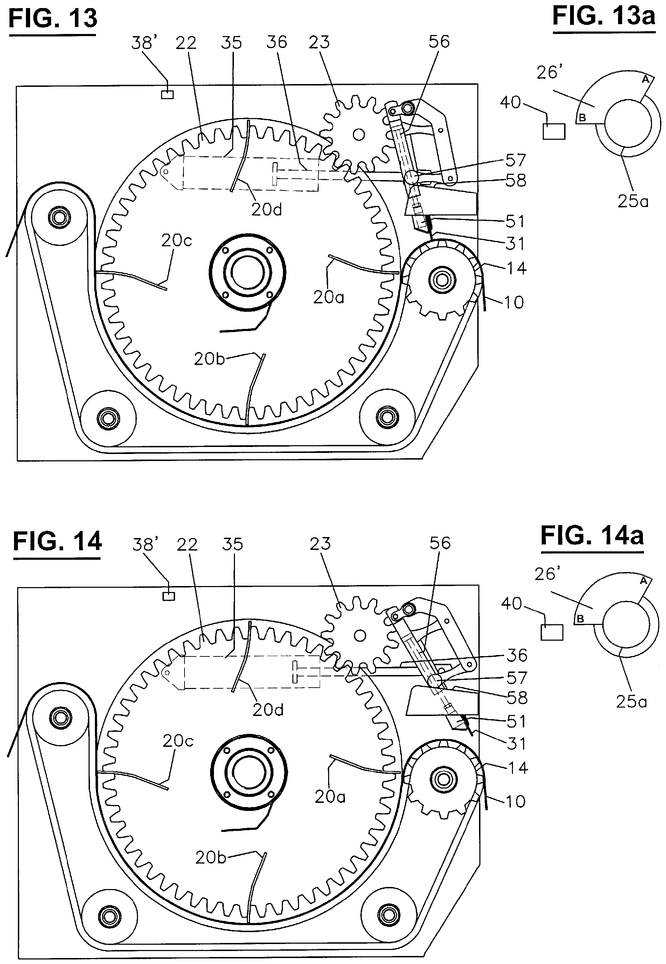

Figuren 13 und 13a beziehen sich auf die Phase 7: Zenitposition. Der Zylinder 36 ist weiterhin am Arbeiten und ist nun grösstenteils ausgefahren. Der Abstreifer 51 bzw. der Führungsbolzen 57 wird über die Führungsschiene 58 so geleitet, dass die Lippe 31 der Kontur des Filters 10 nachfährt. Durch die Kontur der Führungskurve, welche durch die Führungsschiene 58 gegeben ist, wird definiert, wie lange der Abstreifer 51 dem Filter 10 nachfährt. Im Beispiel hier wird dem Filter 10 bis zum höchsten Punkt gefolgt, wo dann der Abstreift 51 im Wesentlichen tangential weitergeleitet wird, bis es zurück in der Grundstellung ist.

Eine Drehung der Einheit 20a-20d, 22 und der Antriebsrolle 14 wird weiterhin verriegelt.
Figuren 14 und 14a beziehen sich auf die Phase 8: Endposition. Nun ist der Abstreifer 51 wieder in der Grundstellung. Die Verriegelung der Antriebswelle 25a und der Antriebsrolle 14 ist aufgehoben. Die Führungsschiene 58 ist in der Formgebung so gewählt, dass die Lippe 31 vom Filter 10 beabstandet angeordnet ist.

Der Zyklus ist nun zu Ende. Der Positionsschalter 40 befindet sich zwischen den Positionen B und A, sein Zustand ist auf "Aus" und das Ventil 38' ist ausgeschaltet. Dadurch bleibt der Abstreifer 51 in der Grundstellung, bis die Antriebswelle 25a den Positionsschalter 40 wieder über A gedreht hat, die nächste Schaufel 20b bei der ersten Position der Schaufel 20a gemäss Fig. 7 ist und somit der Zyklus von vorne beginnen kann.
Aus der vorangehenden Beschreibung sind dem Fachmann zahlreiche Abwandlungen zugänglich, ohne den Schutzbereich der Erfindung zu verlassen, der durch die Ansprüche definiert ist.
So ist es beim ersten Ausführungsbeispiel denkbar, den Abstreifer 30 wegzulassen und nur die Einheit aus Drehteil 22 und Schaufeln 20a-20d als Fördermittel vorzusehen, um unabhängig vom Filtervorschub Material aus der Filtermulde 8a hinauszubefördern.

Beim zweiten Ausführungsbeispiel sind auch andere Varianten denkbar, um den Abstreifer 51 auf einer vorgegebenen Bahn zu bewegen. Beispielsweise kann dazu eine geeignet ausgebildete Kulisse vorgesehen sein.

Im Weiteren ist bei den oben dargestellten Ausführungsbeispielen ein Filter in Form eines Filterbandes vorgesehen, welches durch die Wanne 8 hindurch transportiert wird. Alternativ ist es denkbar, einen Filter in Form eines Endlosbandes einzusetzen, das zumindest teilweise in der Wanne angeordnet ist zur Bildung der Filtermulde. Bei dieser Ausführungsform ist eine Reinigungsstation vorgesehen, durch welche der Endlosbandfilter wiederkehrend vorbeiläuft, um ihn vom restlichen abgetrennten Material zu reinigen, das von den Fördermitteln noch nicht wegtransportiert worden ist.

## Patentansprüche

1. Filtervorrichtung umfassend eine Wanne (8) zur Bildung einer Filtermulde (8a), in welche Flüssigkeit mit abzuscheidendem Material einleitbar ist, und einen Filterantrieb (15) zum Transportieren eines Filters (10) durch die Filtermulde (8a), **gekennzeichnet durch** Fördermittel (20a-20d, 22, 23, 25, 30, 35, 50) zum Fördern abgeschiedenen Materials, welches sich in der Filtermulde auf dem Filter befindet, entlang eines Förderwegs zu einer Sammelstation, wobei die Fördermittel mindestens einen Förderantrieb (35, 55) aufweisen, um abgeschiedenes Material relativ zum Filter (10) zu bewegen, und mindestens ein Förderelement (20a-20d, 30; 51), das mittels des mindestens einen Förderantriebs (35, 55) relativ zum Filter (10) bewegbar ist und eine umlaufende, durch die Filtermulde hindurch bewegbare Schaufel (20a-20d) umfasst.

2. Filtervorrichtung nach Anspruch 1, wobei ein weiteres Förderelement einen hin und her bewegbaren Abstreifer (30; 51) umfasst.

3. Filtervorrichtung nach Anspruch 1 oder 2, wobei die mindestens eine umlaufende Schaufel (20a-20d) an einem Drehteil (22) angeordnet ist, das vorzugsweise relativ zu drehbaren Dichtteilen (16) drehbar ist, welche die Filtermulde (8a) seitlich begrenzen, und/oder das vorzugsweise als Zahnrad ausgebildet ist.

4. Filtervorrichtung nach einem der Ansprüche 2 bis 3, wobei der Abstreifer (30; 51) um einen Winkelbereich verschwenkbar und/oder ausserhalb der Filtermulde (8a) angeordnet ist.

5. Filtervorrichtung nach einem der Ansprüche 2 bis 4, wobei die Fördermittel (20a-20d, 22, 23, 25, 30, 35, 50) einen Linearantrieb (35) zum Verschwenken des Abstreifers (30; 51) aufweisen.

6. Filtervorrichtung nach einem der Ansprüche 2 bis 5, wobei der Abstreifer (51) auf einer Bahn bewegbar ist, die Abschnitte mit unterschiedlichen Krümmungen aufweist, wobei vorzugsweise die Kontur einer Schaufel (20a-20d) und/oder des Filters (10) zumindest einen Teil der Bahn definiert.

7. Filtervorrichtung nach Anspruch 6, wobei der Abstreifer (51) verschwenkbar sowie linear verschiebbar ist und/oder die Fördermittel (20a-20d, 22, 23, 25, 30, 35, 50) mindestens zwei Antriebe (35, 55) aufweisen zum Bewegen des Abstreifers (51), vorzugsweise zwei Linearantriebe.

8. Filtervorrichtung nach einem der Ansprüche 6 bis 7, mit Führungsmitteln (57, 58), welche den Abstreifer (51) beim Bewegen auf einem Abschnitt der Bahn führen, wobei die Führungsmittel (57, 58) vorzugsweise so ausgelegt sind, dass der Abstreifer (51) beim Abstreifen von Material entlang des Filters (10) bewegt und dann von diesem angehoben wird.

9. Verfahren zum Abscheiden von Material aus einer Flüssigkeit, welche in eine Filtermulde (8a) geleitet wird, wobei durch die Filtermulde hindurch ein Filter (10) transportierbar ist, **dadurch gekennzeichnet, dass** abgeschiedenes Material, welches sich auf dem Filter befindet, von der Filtermulde (8a) entlang eines Förderweges zu einer Sammelstation transportiert wird, indem es zumindest auf einem Teil des Förderweges relativ zum Filter (10) befördert wird durch Verwendung mindestens einer drehbaren Schaufel (20a-20d), die durch die Filtermulde hindurch bewegt wird.

10. Verfahren nach Anspruch 9, wobei abgeschiedenes Material relativ zum Filter (10) bewegt wird, indem es in die Vertikale (Z) und/oder quer dazu befördert wird.

11. Verfahren nach einem der Ansprüche 9 bis 10, wobei abgeschiedenes Material mittels eines hin und her bewegbaren Abstreifers (30, 51) gefördert wird.

12. Verfahren nach Anspruch 11, wobei der Abstreifer (30, 51) zum Fördern des Materials entlang der Schaufel (20a-20d) und/oder entlang eines Abschnitts des Filters (10) bewegt wird.

13. Verfahren nach einem der Ansprüche 11 bis 12, wobei der Abstreifer (51) auf einer ersten Bahn von einer Grundstellung zu einer Abstreifstellung bewegt und auf einer zweiten Bahn von der Abstreifstellung zurück zur Grundstellung bewegt wird, wobei die Bahnen Abschnitte mit verschiedenen Krümmungen aufweisen und/oder zumindest teilweise verschieden sind.

14. Verfahren nach einem der Ansprüche 9 bis 13, bei welchem eine Filtervorrichtung nach einem der Ansprüche 1 bis 8 verwendet wird.

## Claims

1. Filter device comprising a vat (8) for forming a filter trough (8a), into which a liquid containing a material to be separated therefrom can be introduced, and a filter drive (15) for transporting a filter (10) through the filter trough (8a), **characterised by**
conveyor means (20a-20d, 22, 23, 25, 30, 35, 50) for conveying separated material located on the filter in the filter trough along a conveying path to a collecting station, the conveyor means comprising at least one conveyor drive (35, 55) for moving separated material relative to the filter (10) and at least one conveyor element (20a-20d, 30; 51), which is movable relative to the filter (10) by means of the at least one conveyor drive (35, 55) and comprises a circulating vane (20a-20d), which is movable through the filter trough.

2. Filter device according to claim 1, wherein an additional conveyor element comprises a wiper (30; 51) that is movable back and forth.

3. Filter device according to claim 1 or 2, wherein the at least one circulating vane (20a-20d) is arranged on a rotating part (22), which is preferably rotatable relative to rotatable sealing members (16), which delimit the filter trough (8a) laterally, and/or is preferably in the form of a gearwheel.

4. Filter device according to one of claims 2 to 3, wherein the wiper (30; 51) is pivotable over an angular range and/or arranged outside the filter trough (8a).

5. Filter device according to one of claims 2 to 4, wherein the conveyor means (20a-20d, 22, 23, 25, 30, 35, 50) comprise a linear drive (35) for pivoting the wiper (30; 51) .

6. Filter device according to one of claims 2 to 5, wherein the wiper (51) is movable on a trajectory that has sections of different curvatures, the contour of a vane (20a-20d) and/or of the filter (10) defining at least part of the trajectory.

7. Filter device according to claim 6, wherein the wiper (51) is pivotable as well as linearly displaceable, and/or the conveyor means (20a-20d, 22, 23, 25, 30, 35, 50) comprise at least two drives (35, 55) for moving the wiper (51), preferably two linear drives.

8. Filter device according to one of claims 6 to 7, comprising guiding means (57, 58) which guide the wiper (51) while it is being moved on a section of the trajectory, the guiding means (57, 58) being preferably designed such that the wiper (51) is moved along the filter (10) while it is wiping off material and is then lifted off from the filter.

9. Method for separating material from a liquid that is introduced into a filter trough (8a), wherein a filter (10) is transportable through the filter trough, **characterised in that** separated material located on the filter is transported from the filter trough (8a) along a conveying path to a collecting station by being conveyed on at least part of the conveying path relative to the filter (10) by means of at least one rotatable vane (20a-20d), which is moved through the filter trough.

10. Method according to claim 9, wherein separated material is moved relative to the filter (10) by being conveyed in the vertical direction (Z) and/or transversely thereto.

11. Method according to one of claims 9 to 10, wherein separated material is conveyed by means of a wiper (30, 51), which is movable back and forth.

12. Method according to claim 11, wherein in order to convey the material, the wiper (30, 51) is moved along the vane (20a-20d) and/or along a portion of the filter (10).

13. Method according to one of claims 11 to 12, wherein on a first trajectory, the wiper (51) is moved from a home position to a wiping position and on a second trajectory, from the wiping position back to the home position, the trajectories comprising sections of different curvatures and/or being at least partly different from each other.

14. Method according to one of claims 9 to 13, wherein a filter device according to one of claims 1 to 8 is used.

## Revendications

1. Dispositif à filtre comprenant une cuve (8) pour former un bac à filtre (8a) dans lequel peut être amené un liquide contenant de la matière à séparer de celui-ci et un entraînement (15) de filtre pour transporter un filtre (10) à travers le bac à filtre (8a), **caractérisé par** des moyens de transport (20a-20d, 22, 23, 25, 30, 35, 50) pour transporter la matière séparée qui se trouve sur le filtre dans le bac à filtre le long d'un chemin de transport vers une station collectrice, les moyens de transport comprenant au moins un entraînement de transport (35, 55) pour déplacer de la matière séparée par rapport au filtre (10) et au moins un élément de transport (20a-20d, 30; 51) qui est déplaçable par rapport au filtre (10) par ledit au moins un entraînement de transport (35, 55) et qui comprend une pale (20a-20d) circulante qui est déplaçable à travers le bac à filtre.

2. Dispositif à filtre selon la revendication 1, où un élément de transport supplémentaire comprend un racloir (30; 51) déplaçable en va-et-vient.

3. Dispositif à filtre selon la revendication 1 ou 2, où ladite au moins une pale (20a-20d) circulante est agencée sur une partie rotative (22) qui est préférablement rotative par rapport à des éléments d'étanchéité (16) rotatifs qui délimitent latéralement le bac à filtre (8a) et/ou qui est préférablement réalisée sous la forme d'une roue dentée.

4. Dispositif à filtre selon l'une des revendications 2 à 3, où le racloir (30; 51) peut pivoter sur une plage angulaire et/ou est agencé à l'extérieur du bac à filtre (8a) .

5. Dispositif à filtre selon l'une des revendications 2 à 4, où les moyens de transport (20a-20d, 22, 23, 25, 30, 35, 50) comprennent un entraînement linéaire (35) pour pivoter le racloir (30; 51).

6. Dispositif à filtre selon l'une des revendications 2 à 5, où le racloir (51) est déplaçable sur une trajectoire qui comprend des sections à courbures différentes, le contour d'une pale (20a-20d) et/ou du filtre (10) définissant préférablement au moins une partie de la trajectoire.

7. Dispositif à filtre selon la revendication 6, où le racloir (51) est pivotant et linéairement déplaçable, et/ou les moyens de transport (20a-20d, 22, 23, 25, 30, 35, 50) comprennent au moins deux entraînements (35, 55) pour déplacer le racloir (51), préférablement deux entraînements linéaires.

8. Dispositif à filtre selon l'une des revendications 6 à 7, comprenant des moyens de guidage (57, 58) qui guident le racloir (51) lors de son déplacement sur une section de la trajectoire, les moyens de guidage (57, 58) étant préférablement conçus de telle manière que le racloir (51) est déplacé le long du filtre (10) alors qu'il racle de la matière et puis soulevé de celui-ci.

9. Procédé de séparation de matière d'un liquide lequel est amené dans un bac à filtre (8a) à travers lequel un filtre (10) est transportable, **caractérisé en ce que** la matière séparée qui se trouve sur le filtre est transportée du bac à filtre (8a) le long d'un chemin de transport vers une station collectrice en la transportant par rapport au filtre (10) au moins sur une partie du chemin de transport au moyen d'au moins une pale rotative (20a-20d) qui est déplacée à travers le bac à filtre.

10. Procédé selon la revendication 9, où la matière séparée est déplacée par rapport au filtre (10) en la transportant en direction verticale (Z) et/ou transversalement à celle-ci.

11. Procédé selon l'une des revendications 9 à 10, où la matière séparée est transportée au moyen d'un racloir (30, 51) déplaçable en va-et-vient.

12. Procédé selon la revendication 11, où, pour transporter la matière, le racloir (30, 51) est déplacé le long de la pale (20a-20d) et/ou le long d'une partie du filtre (10).

13. Procédé selon l'une des revendications 11 à 12, où le racloir (51) est déplacé sur une première trajectoire d'une position de base vers une position de raclage et est ramené sur une deuxième trajectoire de la position de raclage à la position de base, lesdites trajectoires comprenant des sections de différentes courbures et/ou étant au moins partiellement différentes l'une de l'autre.

14. Procédé selon l'une des revendications 9 à 13, où un dispositif à filtre selon l'une des revendications 1 à 8 est utilisé.
